(19) Europäisches Patentamt / European Patent Office / Office européen des brevets

(11) **EP 4 509 478 A1**

(12) **EUROPEAN PATENT APPLICATION**

(43) Date of publication:
**19.02.2025 Bulletin 2025/08**

(21) Application number: **23382854.0**

(22) Date of filing: **17.08.2023**

(51) International Patent Classification (IPC):
**C04B 7/52** (2006.01)    **C04B 28/04** (2006.01)

(52) Cooperative Patent Classification (CPC):
(C-Sets available)
**C04B 28/04; C04B 7/527;** C04B 2111/00215;
C04B 2111/10; C04B 2111/80        (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Consejo Superior de Investigaciones Científicas (CSIC)**
  **28006 Madrid (ES)**
• **Technische Universität Darmstadt**
  **64289 Darmstadt (DE)**
• **Universidad Pública De Navarra**
  **31006 Pamplona (ES)**
• **Fundación Tecnalia Research & Innovation**
  **20009 Donostia-San Sebastian, Guipuzcoa (ES)**
• **Katholieke Universiteit Leuven**
  **3000 Leuven (BE)**
• **Microlight3D**
  **38700 La Tronche (FR)**
• **Politecnico Di Torino**
  **10129 Torino (IT)**
• **Universidad del País Vasco/Euskal Herriko Unibertsitatea**
  **48940 Leioa, Vizcaya (ES)**

(72) Inventors:
• **SÁNCHEZ DOLADO, Jorge**
  **Donostia/San Sebastián (ES)**
• **GORACCI, Guido**
  **Donostia/San Sebastián (ES)**
• **AYUELA FERNÁNDEZ, Andrés**
  **Donostia/San Sebastián (ES)**
• **ARRESE-IGOR IRIGOYEN, Silvia**
  **Donostia/San Sebastián (ES)**

• **BERUETE DÍAZ, Miguel**
  **Pamplona (ES)**
• **LIBERAL OLLETA, Íñigo**
  **Pamplona (ES)**
• **LEZAUN CAPDEVILLA, Carlos**
  **Pamplona (ES)**
• **TORRES GARCÍA, Alicia**
  **Pamplona (ES)**
• **PÉREZ ESCUDERO, José Manuel**
  **Pamplona (ES)**
• **GAITERO REDONDO, Juan José**
  **Donostia/San Sebastián (ES)**
• **PRABHU, Achutha**
  **Donostia/San Sebastián (ES)**
• **KOENDERS, Edduardus**
  **Darmstadt (DE)**
• **MANKEL, Christophe**
  **Darmstadt (DE)**
• **UKRAINCYK, Neven**
  **Darmstadt (DE)**
• **PERALTA, Ignacio**
  **Darmstadt (DE)**
• **CAGNONI, Mateo**
  **Torino (IT)**
• **CAPELLUTI, Federica**
  **Torino (IT)**
• **SYLVANDER, Antoine**
  **La Tronche (FR)**
• **BARBIER, Denis**
  **La Tronche (FR)**
• **ALLACKER, Karen**
  **Leuven (BE)**
• **ADAMS, Nick**
  **Leuven (BE)**

(74) Representative: **Cueto, Sénida**
  **SP3 Patents S.L.**
  **Los Madroños, 23**
  **28891 Velilla de San Antonio (ES)**

(54) **A DAYTIME RADIATIVE COOLING CEMENTITIOUS COMPOSITE (DRCCC)**

(57)    The present invention refers to a Daytime Radiative Cooling Cementitious composite comprising:
• an OPC binder in the form of grains, with an amount of $Fe_2O_3$ lower than 0.05 % by weight with respect to the total weight of the OPC binder, wherein the grain size is below 25 $\mu$m,
• water, wherein the weight ratio between water and the OPC binder is between 0.2 to 0.6,
• an addition in a proportion between 0.1% and 50% by weight with respect to the weight of the OPC binder

**(Cont. next page)**

and wherein the resulting DRCCC has a pore size below 6 $\mu$m as defined by mercury intrusion porosimetry,
that can optionally comprise micropatterns, and to its use in the construction industry, such as building construction, in civil works such as reservoirs, bridges, dams and sewers, in solar cell technology or in urban architectural design.

Figure 13

(52) Cooperative Patent Classification (CPC): (Cont.)

C-Sets
C04B 7/527, C04B 7/02;
C04B 28/04, C04B 14/06, C04B 14/28,
C04B 14/305, C04B 20/008, C04B 38/0054;
C04B 28/04, C04B 14/06, C04B 14/301,
C04B 20/008, C04B 38/0054;
C04B 28/04, C04B 14/06, C04B 16/08,
C04B 20/008, C04B 38/0054;
C04B 28/04, C04B 14/06, C04B 20/008,
C04B 38/0054, C04B 2103/0071

**Description**

**Field of the invention**

The present invention refers to cementitious composites with enhanced radiative cooling properties.

**Background to the invention**

Concrete and cementitious materials can reach very high temperatures (>60-80 °C) when exposed to solar radiation. This involves that buildings consume large amounts of energy for powering air conditioning and maintaining enough indoor comfort.

Currently most state of the art solutions for roofs are based on polymer-based coatings [Mandal et al; Paints as a Scalable and Effective Radiative Cooling Technology for Buildings; Joule 4, 1350-1356 (2022)] containing certain pigments (typically $TiO_2$) that are able to "cool" the surface. Typically, they can reduce the temperature 20-30°C, while entailing noticeable energy savings.

To the best of our knowledge, only few papers have dealt with the possibility of using cement-based materials for radiative cooling purposes. One is the article by Lu et al. Cement and Concrete Composites 119 (2021) 104004, "Radiative cooling potential of cementitious composites: Physical and chemical origins"; https://doi.org/J.cemcon comp/2021.104004. This paper illustrates that white cements in combination with large amounts of whitening agents (about 150% by weight of cement) turned to give -26.2 W/m$^2$ as net-radiative cooling power. This value is clearly much closer to a positive radiative cooling power than typical OPC concretes (about -600 W/m$^2$), but still is not a daytime radiative cooling material. A second one is the article by N. Yang et al. Geopolymer-based sub-ambient daytime radiative cooling coating; EcoMat 5 (2022) e12284, but here the study proposes a metakaolin-based geopolymer coating. While the coating seems to enable daytime radiative cooling, the preparation of the metakaolin-based geopolymer employed large amounts of nano-$BaSO_4$ (350% by weigth (BW) of metakaolin) together with other elements like fluoropolymer resins employed as lubrificants (50% BW). Finally, the recent work of D. Liu et al Scalable Cooling Cementitious Composites: Synergy between Reflective, Radiative, and Evaporative Cooling; Energy & Buildings 285 (2023) 112909 has interestingly shown the synergy between radiative and evaporative cooling. Indeed, wet samples prepared with 50% BW of TiOz exhibited sub-ambient temperatures because of the extra evaporative cooling power contribution. While interesting, it is clear that this positive performance is temporary and will disappear once the sample becomes dry.

The possibility of durable daytime radiative cooling concretes has been proposed recently in the MIRACLE project [www.miracle-concrete.eu].

**Description of the invention**

The current invention provides a cementitious composite whose response to light has been engineered for exhibiting radiative cooling ability; i.e. the composite will be able to expel heat from buildings to the outer space without any extra energy consumption, while maintaining the processing simplicity of normal concretes and cement-based materials. For this to happen, the photonic properties have been engineered for efficiently scattering sun-light while focusing the emissivity in the Atmospheric Window (a narrow spectral region centred at light wavelengths of 10 microns where the atmosphere is transparent). To this end, the concept of cementitious composite has been engineered at different levels.

1) First, the most appropriate chemical ingredients chosen in view of their photonic response. Focusing our efforts in Ordinary Portland Cements (OPC) based composites, the first thing to mention is that the cement binders have to contain large amounts of pure Alite ($C_3S$) and Tricalcium Aluminate (C3A), and limit or lack of Ferrite phases, maximum content of $Fe_2O_3$ as 0.05 % by weight. Beyond this point, the reflectance of solar radiation drops dramatically ($R_{Sun}$ < 0.6) and the radiative cooling capacity disappears.

(2) Thereafter, the hierarchical porous cementitious structure must be carefully tuned to enhance the light scattering. In fact, the proposed structure corresponds to a cementitious matrix where the maximum pore sizes are below 4-6 microns. This can be obtained with traditional mixing schemes provided the cement grains is sufficiently small (eg. median particle size lower than 20 microns). Note that the use of foaming protocols and other means for maximizing pore sizes should be avoided.

3) The inclusion of certain micro/nano additions is possible and highly desirable. However, differently to previous works in the state-of-the-art, the amount required in our DRCCCs is much lower (below 50% and preferably between 15 and 45% by weight of cement binder). Besides, when present in solid particles their size should not exceed 20 microns being a wide size distribution below 10 microns highly recommended. Appropriate examples can be microparticles of TiOz and/or CaCO$_3$. Other interesting additions are nano-micro hollow spheres of Silica or PMMA, cenospheres or similar structures. In this case the particles can be a bit bigger (but below 50 microns), but their wall thickness should be below 1 micron.

An additional case is the one of filling the hollow capsules with a Phase Change Material. This solution (namely, a microencapsulated Phase Change Material (MPCM)) can provide an additional advantage because of the latent transitions. In a sense, they can act similarly to the evaporative (H$_2$O latent heat) cooling power highlighted in [D. Liu et al Scalable Cooling Cementitious Composites: Synergy between Reflective, Radiative, and Evaporative Cooling; Energy & Buildings 285 (2023) 112909], but stable under temperature cycles.

(4) Finally, to improve the radiative cooling performance of the DRCCCs, some alternatives of DRCCCs have been engineered by embedding microstructures in a regular fashion (meta-structures) into the DRCCC matrix. Among multiple configurations, the best designs have been identified with AI (artificial intelligence) methods.

In this specification the term "cementitious" in the expression "cementitious composite" refers to concrete, mortar, cement, cement paste.

In this specification "cementitious composite" and DRCCC are terms used interchangeably.

The term "OPC binder" refers to Ordinary Portland Cement.

The term "wall thickness" and "layer thickness" are terms used interchangeably.

In this specification, whenever a numerical range is indicated, it is to be understood that the physical magnitude to which it refers, can take the value of both limits, this is, the lowest and the highest value of the range.

The present invention refers to a Daytime Radiative Cooling Cementitious composite (DRCCC) comprising:

- an OPC binder in the form of grains, with an amount of Fe$_2$O$_3$ lower than 0.05% by weight with respect to the total weight of the OPC binder, wherein the grain size is below 25 $\mu$m,
- water, wherein the weight ratio between water and the OPC binder is between 0.2 to 0.6.
- an addition in a proportion between 0.1% and 50% by weight with respect to the weight of the OPC binder

and wherein the resulting DRCCC has a pore size below 6 $\mu$m as defined by mercury intrusion porosimetry.

The DRCCC is selected among concrete, mortar cement and cement paste.

The DRCCC has a porosity whose larger pore sizes are below 6 $\mu$m, for example, of the order of 5-6 $\mu$m, preferably between 4-5 $\mu$m, more preferably below 4 $\mu$m, defined by mercury intrusion porosimetry.

The OPC binder can have any composition, but preferably, an amount of 70% to 100% of CaS by weight with regard to the total OPC binder. Even more preferably, the OPC binder contains 90-100% w/w OPC binder, and still preferably 100% of CaS.

The amount of Fe$_2$O$_3$ in the cementitious composite is lower than 0.05%, preferably lower than 0.01%, more preferably lower than 0.001%, and even more preferably lower than $10^{-4}$%, and specially preferred 0% by weight with respect to the total weight of the OPC binder.

The cementitious composite has a porosity where the pores can be between 0.5 nm and 6 $\mu$m. Generally, the larger pores are of the order of 5-6 $\mu$m, preferably between 4 and 5 $\mu$m, more preferably below 4 $\mu$m.

The term "additions" means a particular material or materials added to the cementitious composite to confer certain properties. These additions can be added in percentages between 0.1% to 50% by weight with regard to the total weight of the OPC binder. Furthermore, the term additions refer to microadditions and/or to nanoadditions, wherein "micro" and "nano" have their usual meaning.

According to particular embodiments, the cementitious composite comprises an addition in an amount between 0.5% and 50%, preferably between 15 and 45%, even more preferably between of 20 and 25% by weight with respect to the total weight of OPC binder.

According to a particular embodiment, the cementitious composite comprises an addition in an amount of 25% by weight with respect to the total weight of the OPC binder.

According to particular embodiments the addition is selected from:

o titanium dioxide particles (TiO$_2$) and/or calcium carbonate (CaCO$_3$) of sizes between 10 nm and 20 $\mu$m, preferably between 1 $\mu$m to 5 $\mu$m

o hollow inorganic capsules of sizes between 10 nm and 50 $\mu$m and wall thickness below 10 $\mu$m, preferably wall thickness between 1 $\mu$m to 5 $\mu$m

o hollow organic capsules of sizes between 10 nm and 50 $\mu$m and wall thickness below 10 $\mu$m, preferably wall thickness between 1 $\mu$m to 5 $\mu$m,

o microencapsulated Phase Change Materials (MPCM) wherein a Phase Change Material is inside of inorganic or organic capsules of sizes below 50 $\mu$m and wall thicknesses below 10 $\mu$m, preferably below 1 $\mu$m.

In a particular embodiment the addition consists of hollow inorganic capsules.

The hollow inorganic capsules can be, for example, made of silica, alumina or cenospheres.

In a further particular embodiment the addition consists of hollow organic particles.

The organic hollow particles are transparent organic capsules, such as Poly(methyl methacrylate) (PMMA), acrylic resins, epoxy resins (like SU 8, for instance), Polycarbonate (PC).

The Phase Change Materials can be any PCM with a phase change temperature between 15-30 °C.

The Phase Change Materials can be, for example, bio-polymers, paraffins, or salt hydrates.

The inorganic or organic capsules wherein the Phase Change Materials (MPCM) are encapsulated are the same capsules called " hollow organic capsules" and "hollow inorganic capsules" mentioned above as alternatives of additions.

As an important case of addition, Microencapsulated Phase Change Materials (MPCM) can be used too, because they can also contribute to reduce the non-radiative losses; i.e. part of the incoming energy coming from the sun and atmosphere is spent in the phase change transition (latent heat) instead of raising the surface's temperature.

The cementitious composite, optionally, can comprise superplasticizers (SP) in order to make easier the mixing of the raw materials (cement binder+water+additions) and also to reduce the water-to-binder ratio.

The SP are conventional materials within the field and their amount in the DRCCC can be between 0% up to the amount needed to correctly knead the mixture, according to the chosen water/binder range.

The cementitious composite, optionally, can have micropatterns displayed in an ordered fashion (called meta-structures). In particular, these micropatterns can be made of:

- Metallic solid fibers (for example, steel, aluminium, etc)
- polymeric coated fibres (coated, for example, with $TiO_2$, Ag, Al, Ni or ZnO)
- 3D gratings with large refractive index contrast elements (like Si, $TiO_2$, air).
- 3D gratings made of organic resins (e.g. SU 8, PMMA, PC) containing air and/or highly reflective solid particles ($TiO_2$, $C_3S$, $C_2S$, $C_3S$, Portlandite (CH), $CaCO_3$, etc).

The meaning of "high contrast" is commonly understood by the skilled in this technology and can be found, for example, in

https://en.wikipedia.org/wiki/High_contrast grating

Typical shapes of the micropatterns comprise hollow triangles, squares and hexagons or solid cylinders, solid prisms and spheres. Regarding dimensions, these micropatterns range from hundreds of nanometres up to hundreds of millimetres (for example, from 100 nm up to 950 mm).

A particular embodiment of the proposed meta-structures corresponds to 3D structures formed by repetition of empty cells (see 3D structure of Examples 4 and 5) whose layers have thickness between 1 micron to 30 microns, depth between 10 to 100 microns and whose length (period) is between 100 microns to hundreds (for example, 900 mm) of millimetres. Besides, the empty spaces of these 3D structures can be filled by highly light dispersive materials like CaS particles, $C_3A$ particles, $C_2S$ particles, TiOz nanoparticles or Portlandite particles (CH). Depending on the case, the filled 3D structure would require a cover, that can be the same material used in the 3D process or another similar. Typically, it can be PMMA, SU8 or PC. Finally, the width of the cover can range between 0 (no cover) to some tenths of microns without affecting much the performance. For example, the cover can have a width ranging between 0 microns and 20 microns, for example, of about 2.0 $\mu$m.

The process for obtaining the DRCCC of the invention is a conventional process comprising conventional cement and concrete protocols.

A DRCCC that additionally contains a 3D micropatterned structure that can be produced by Two Photon Polymerization (TTP) techniques or by 3D printing technology.

Therefore, the present invention also refers to a method for obtaining DRCCC previously defined with micropatterns, that comprises preparing the DRCCC and printing the micropatterns on the DRCCC surface or applying two photon polymerization technique.

The use of the DRCCC previously defined in the construction industry, particularly for building construction, civil works (for example, reservoirs, bridges) has an advantage with respect to the state of the art materials, namely in energy saving, advantages in extending the lifetime of said buildings and civil works.

The DRCCCs can also largely reduce the use of air conditioning and achieve large energy buildings savings.

The present invention also refers to the use of the DRCCC defined above, in the construction industry. In particular, the construction industry can be for example, building construction.

The present invention also refers to the use of the DRCCC defined above, in civil works. As examples of civil works, reservoirs, bridges, dams, pavements and sewers can be mentioned.

The DRCCCs can avoid large temperature gradients that trigger damage processes that compromise the durability of these civil Infrastructures.

The present invention also refers to the use of the DRCCC defined above, in solar cell technology, wherein the DRCCC can serve to cool-down the solar cell set-up and improve the solar cell efficiency.

The present invention also refers to the use of the DRCCC in urban architectural design, where the DRCCCs can largely contribute to palliate the harmful effects of the so-called Urban Heat Island Effect.

The DRCCC of the invention has a photonic response, such that the composite exhibits:

- Reflectance of Sun irradiation (Rsun) larger than 0.85 $\pm$0.1
- Emissivity in the Atmospheric Windows larger than 0.95 $\pm$0.1
- Daytime radiative cooling ability at ambient temperatures below 30°C under solar irradiances of 900W/m$^2$ (noon irradiances).

**Brief description of drawings**

**Figure 1:** Reflectance of the OPC clinker phases.

**Figure 2.** Reflectance of the OPC oxides

**Figure 3:** Impact of %Fe$_2$O$_3$ on the reflectivity of C$_3$S cement pastes.

**Figure 4:** Particle Size Distribution of the C$_3$S powders.

**Figure 5:** MIP measurement of the CsS-based cement paste with w/c = 0.45 and the inclusion of 25% (w/w) TiO$_2$. Intrudable porosity (dashed line) and log differential pore volume (solid line) as function of pore size (diameter).

**Figure 6:** Reflectance of the fabricated DRCCC of Example 2 (based on TiO$_2$ microadditions)

**Figure 7:** Net radiative cooling power of the fabricated DRCCC of Example 2 (based on TiOz microadditions)

**Figure 8:** Net radiative cooling power of the fabricated DRCCC of Example 3 (based on Hollow Silica Particles)

**Figure 9:** Equilibrium temperature of the fabricated cement paste of Example 3 (based on Hollow Silica Particles)

**Figure 10:** Outdoor experiment. Surface Temperature of the DRCCC of Example 3 (based on Hollow Silica particles) at ambient temperature

**Figure 11:** Design of the starting empty square holes 3D micropattern.

**Figure 12:** SEM image of the 3D micropattern filled with C$_3$S nanoparticles.

**Figure 13:** C$_3$S powder reflectance compared with the DRCCC of Example 2.

**Figure 14:** Image from IR camera of the DRCCC of Example 4.

**Figure 15:** Effect of the period for a 3D patterned structure with wall thickness of 10 microns and the deep of 65 microns.

**Figure 16:** Net cooling power of Example 2 with superimposed 3D micropatterns (Wall thickness =10 microns x Period =20 millimetres x Deep =65 microns) filled with C$_3$S particles as a function of the cover width.

**Figure 17:** Outdoor experiment. Surface Temperature of the DRCCC of Example 5 (based on Hollow Silica particles and 3D micropattern) in comparison to the ambient temperature.

**EXAMPLES**

In the following some examples are described that are not limitative of the invention.

Example1 illustrates the relevance of using binders based on C$_3$S and the crucial need of limiting the content of Fe$_2$O$_3$.

Example 2 provides an example of DRCCC based on TiO$_2$ microadditions.

Example 3 provides an example of DRCCC based on Hollow Silica microadditions.

Example 4 provides an example of DRCCC based on TiOz microadditions with a superimposed patterned structure (meta-structure).

Example 5 provides an example of DRCCC based on Hollow Silica microadditions with a superimposed patterned structure (meta-structure).

**EXAMPLE 1. OPC clinker phases and OPC oxides**

Cement clinker is a nodular material produced during the manufacture of Portland cement. It is composed primarily of calcium silicates, aluminates, and ferrites. These compounds form as a result of chemical reactions during the heating of a mixture of raw materials in a kiln.

The four main cement clinker phases are:

- Tricalcium silicate (C$_3$S): This is the most abundant phase, comprising about 50-70% of the clinker. It reacts with water to form calcium silicate hydrate (C-S-H) gel, which is responsible for the strength and durability of concrete.

- Dicalcium silicate ($C_2S$): This phase makes up about 15-30% of the clinker. It also reacts with water to form C-S-H gel, but at a slower rate than $C_3S$.
- Tricalcium aluminate ($C_3A$): This phase makes up about 5-15% of the clinker. It reacts with water to form calcium aluminate hydrate (C-A-H) gel, which contributes to early strength development in concrete.
- Tetracalcium aluminoferrite ($C_4AF$): This phase makes up about 5-15% of the clinker. It contributes to the color of cement and can affect its sulfate resistance.

A cement clinker can contain one or more of the above mentioned phases.

In this Example 1 we have analysed the reflectance of each clinker phase to identify the best and worst phases.

The clinker phases were obtained (or purchased) as follows:

**Alite** ($Ca_3SiO_5$, $C_3S$ in cement notation) was >98% pure laboratory reagent supplied by Bond Chemicals. The size of the powders is below $40\mu m$, being D50<$10\mu m$.

**Belite** ($Ca_2SiO_3$, $C_2S$ in cement notation) was synthesized in the laboratory following a hydrothermal treatment based on the work of Link et al. [9. Link et al. Cement and Concrete Research 2015, 67, 131-137]

**Aluminate** ($Ca_3Al_2O_5$, $C_3A$) were laboratory reagent purchased to Bond Chemicals and was > 95% pure laboratory reagent.

**Ferrite** ($C_4AF$) was synthesized by mixing reagent grade $CaCO_3$, $Al_2O_3$ and $Fe_2O_3$ to obtain 7g of $Ca_2AlFeO_5$. The raw mix was homogenized for 10 min in a Zr micro ball mill using ethanol as dispersing agent. Then ethanol was evaporated and the solid material was introduced in Pt crucibles for the heat treatment. The clinkerization consisted of two steps. The first one took place for 4 h at 1000°C and the second one for another 4h at 1350°C [10. A. Cuesta, I. Santacruz, S.G. Sanfélix, F. Fauth, M.A.G. Aranda, A.G. De la Torre, Hydration of C4AF in the presence of other phases: A synchrotron X-ray powder diffraction study, Construction and Building Materials Volume 101, Part 1, 30 December 2015, Pages 818-827]. Heating rate was in both cases 10°C/min. At the end of the second step the oven was switched off and the sample removed at approximately 1000°C.

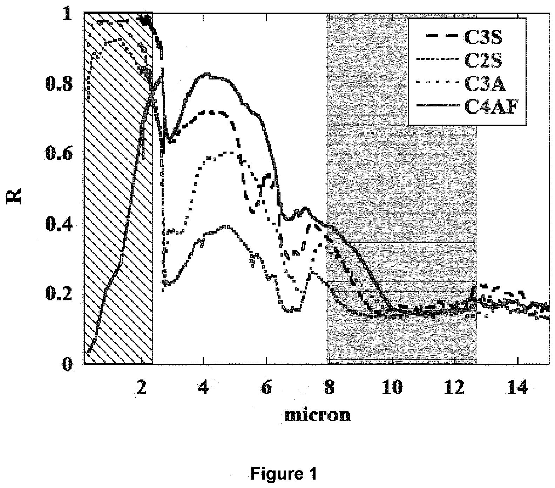

The reflectance of each clinker phase is shown in Figure 1. As can be seen in the Atmospheric Window (AW) (panel with straight stripes), the four phases have a quite low reflectances (high emissivities). This is clearly a positive aspect, being the $C_2S$ (Belite) the most outstanding one. However, the most important aspect has to do with the Sun reflectance (area with slanted stripes, covering wavelength between 0.25 $\mu m$ and 2.5 $\mu m$). Here two main conclusions can be stated:

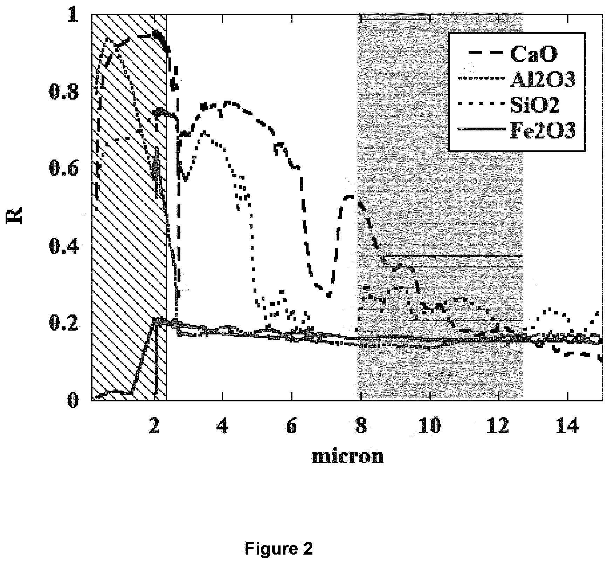

- The $C_3S$ phase seems to exhibit the highest sun reflectance. This seems to favour cement-binders with high $C_3S$ content
- The $C_4AF$ phase is extremely detrimental for cement clinker to have good Sun reflectances. This bad performance is attributable to the $Fe_2O_3$ content. To demonstrate this aspect, Figure 2 displays the reflectance of the cement oxides ($CaO$, $SiO_2$, $Al_2O_3$ and $Fe_2O_3$).

As seen in Figure 2, the $Fe_2O_3$ phase absorbs the Sun radiation and therefore is the main responsible for the low performance of the $C_4AF$ phase.

The previously take-away conclusions (avoid $C_4AF$ and maximize $C_3S$) can be met by commercial White Cements (WC), as they are based on $C_3S$ and $C_2S$ and contain little iron oxide ($Fe_2O_3$). However, they typically contain minor contains of $Fe_2O_3$ in their composition (<0.5 % by weight) with respect to the weight of the OPC binder. To assess the impact of this minor amount of $Fe_2O_3$, we have analysed pure $C_3S$ to which we have added $Fe_2O$, i.e. this Example 1 illustrates the stringent compositional requirement concerning the $Fe_2O_3$ content. To this end, OPC cement pastes of $C_3S$ were prepared at w/c=0.4 and varying amount of $Fe_2O_3$ particles added as additions. Later the samples were cast in cylindrical molds (Ø38 X H15 mm) and sealed. After 24 h, the samples were moved to a hermetically closed desiccator with 100% RH and kept at 20°C until they were measured (after 28 days).

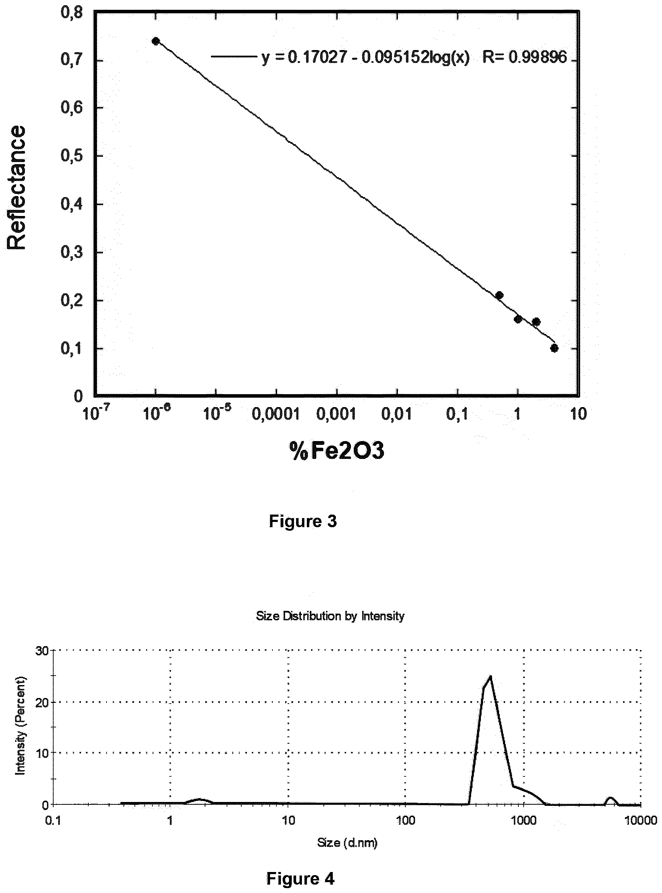

The Sun reflectance (Rsun) of the cement-pastes is displayed in Figure 3 as a function of the $Fe_2O_3$ As can be seen, current $Fe_2O_3$ content of WCs (0.25 - 0.5%) is still too large for good performances. Values of contents below 0.05 % are clearly recommended.

Figure 3. Reflectance of C3S with $Fe_2O_3$ impurities

## EXAMPLE 2. DRCCC, Cement paste, based on $TiO_2$ microadditions

This example illustrates a $C_3S$ cement paste with 25% of TiOz microadditions (w/w with respect of $C_3S$) whose photonic performance allows daytime radiative cooling. The performance is compared with the best design proposed in [Lu et al. Cement and Concrete Composites 119 (2021) 104004, https://doi.org/J.cemconcomp/2021.104004], that corresponds in said article to a white cement with 150% (w/w with respect to the cement) of whitening agents ($TiO_2$ and $CaCO_3$). At Tambient=25ªC and 900W/m² of solar irradiance the concrete of Liu et al. is heated until it reaches Pnet = 0, something that happens at Tsurface =33°C. Our Example 2, made of $C_3S$ with 25% of $TiO_2$ BW of CaS as additions, achieves thermal equilibrium at Tsurface =27°C.

In this case the DRCCC does not contain $Fe_2O_3$.

Preparation:

An OPC cement paste was prepared with $C_3S$, water (water-to-CsS ratio of 0.3) and $TiO_2$ additions (added in 25% by weight of $C_3S$). The $C_3S$ was >98% pure reagent supplied by Bond Chemicals. Most of the $C_3S$ particles are below 1 micron (see Figure 4). The size distribution of the as-received material is correct because the particle sizes are below 25 microns. In case of larger sizes, the powders should be properly sieved to achieve such a value. This low particle size of the binder is needed in order to guarantee that the pore size is below 5-6 microns.

The Titanium dioxide ($TiO_2$) powders (Rutile <99.99%) were laboratory reagents purchased to Nanografiti. The particle sizes were below 45 nanometers.

Before adding the water, the powders of CaS and $TiO_2$ were gently mixed for 60 seconds at 300 rpm. Later the water was added to the mixture of $C_3S$ and $TiO_2$ and the products were initially mixed for 90 seconds at 750 rpm. Later a pause of 60 seconds was undertaken and finally the mixture was stirred again for 90 seconds at 750 rpm. The resulting cement paste was casted in a mold and sealed. After 24 hours, the cement paste was moved to a hermetically closed desiccator with 100%RH and kept at 20°C. The DRCCC (a cement paste) prepared in this Example 2 was analysed after 28 days of curing.

*Table* 1. *Mass percentage of the components used for preparing the cement paste.*

| $C_3S$ | $TiO_2$ | $H_2O$ |
|---|---|---|
| 100 | 25 | 45 |

**Characterization:**

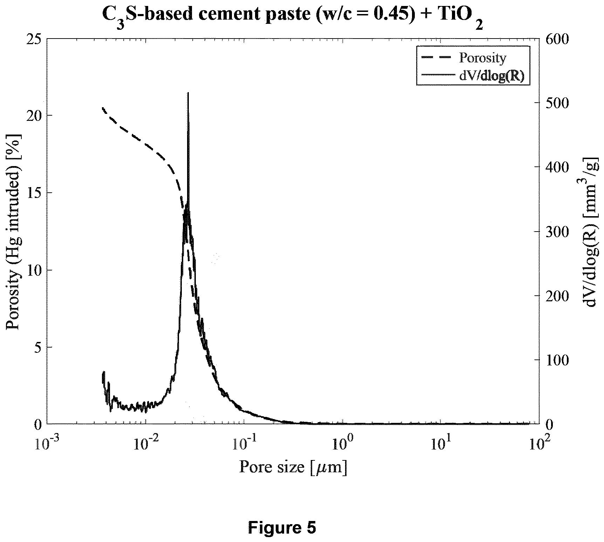

Mercury Intrusion Porosimetry (MIP). The pore structure of the DRCCCs plays an important role in their thermal and radiative properties. Figure 5 shows the pore size distribution of the DRCCC (cement paste) according to the invention, prepared in this Example 2 according to the preparation method described above.

As desired, the pore-sizes are extremely low, with a critical pore diameter about 0.02 $\mu$m. This value is clearly below the threshold OF about 5 $\mu$m required. Table 2 shows the total porosity (about 20% of the volume) and the precise critical pore diameter.

Table 2. Summary of MIP measurements for the CsS-based cement paste with 25% of $TiO_2$.

| Intrudable porosity (%) | 20.52 |
|---|---|
| Critical pore diameter ($\mu$m) | 0.027 |

Infrared and Solar Reflectances. The Infrared reflectivity of the cement paste prepared in this Example 2 was determined by means of a gold-coated 12o integrating sphere in downward configuration equipped with an MCT (mercury cadmium telluride) detector from PIKE. For these measurements, samples consisted on either solid pieces or fine grinded powders, which were inserted into the sphere according to manufacturer specifications.

The Sun reflectance of the samples was characterized by using a UV-VIS-NIR spectrometer (410-SOLAR) for wavelengths between 0.25 $\mu$m and 2.5 $\mu$m. Besides, to correctly calculate the average reflectance over the Sun wavelengths (RSUN) we have used the following equation

$$R_{SUN} = \frac{\int_{0.25\,\mu m}^{2.5\,\mu m} I_{sun}(\lambda) \times R(\lambda)d\lambda}{\int_{0.25\,\mu m}^{2.5\,\mu m} I_{sun}(\lambda)\,d\lambda}$$

Where the Sun irradiation ISUN was taken from the ASTM G173 Global Solar spectrum [ASTM G173-03, Standard Tables for Reference Solar Spectral Irradiance: Direct Normal and Hemispherical on 37° Tilted surface, 2020].

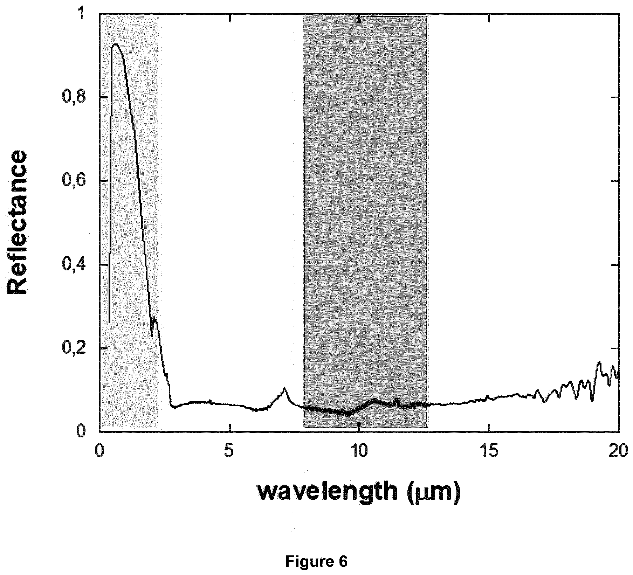

Figure 6 shows the reflectance of DRCCC cement paste prepared in our Example 2.

In Figure 6 the solar domain (0 $\mu$m - 2.5 $\mu$m) is displayed by a light grey panel, whereas the one of the Atmospheric Window (AW) is displayed in dark grey. The Solar Reflectance ($R_{sun}$) corresponds to $R_{sun}$=0.84 and the emissivity in the Atmospheric Window ($e_{AW}$) turns to be $e_{AW}$=0.96. These values are clearly above typical values found in the Radiation Control Coatings (RCC); namely a solar reflectance of at least 0.8 and an ambient temperature infrared emittance of at least 0.8.

Radiative cooling.

Another way of showing the advantage of the DRCCC of the present invention is to represent the Pnet as a function of the surface material, keeping the ambient temperature constant (eg. $T_{amb}$=25°C). For evaluating the radiative cooling power both the atmospheric infrared transmittance and the solar spectral radiation must be assumed. Here we employ the atmospheric transmittance model given by Gemini observatory with air mass= 1.5 and water vapor column of 1. For the Solar radiance the one provided by ASM G173.

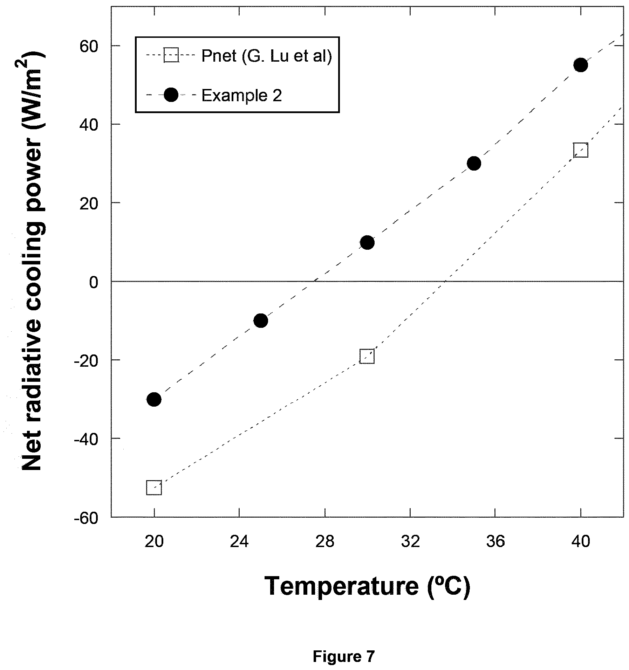

Figure 7 shows the $P_{net}$ as a function of the concrete temperature for the best design of Ref. [G. Lu et al. Cement and Concrete Composites 119 (2021) 104004, https://doi.org/J.cemconcomp/2021.104004] (open squares) and this of our DRCCC - cement paste prepared according to Example 2 (solid points). Note that in the mentioned reference the amount of "whitening agents" is 150% by weight of cement, while in our case the amount of TiOz is just 25% by weight of the OPC binder.

As can be seen, the fabricated DRCCC of Example 2 has cooling power of -10 W/m$^2$ at ambient temperatures about 25 °C, and turns into passive radiative cooling ($P_{net}$=0) when reaching 27.5 °C. Or in other words, the fabricated sample performs as a passive radiative cooling material at ambient temperatures higher than 27.5°C under high direct solar exposure (around 900 W/m$^2$).

**EXAMPLE 3. DRCCC, Cement paste based on Hollow Silica microparticles**

This example improves further the performance of the DRCCC of Example 2, by replacing the addition of $TiO_2$ by Hollow MicroSpheres. To this end, an OPC cement paste was prepared with $C_3S$, water (water-to-CsS ratio of 0.3) and Hollow Silica additions (added in 25% by weight of C3S).

► Preparation:

• The C3S was >98% pure reagent supplied by Bond Chemicals (the same employed in the Example 2).
• The Hollow Silica Microcapsules were produced as follows:

  ∘ Materials: Tetraethoxysilane (98%, reagent grade) was purchased from Sigma-Aldrich and the epoxy resin EpoThinTM 2 was acquired from Buehler. Absolute ethanol (Oppac) was used in the synthesis and distilled water was used for all the aqueous solutions. 1M HCl solution was prepared from concentrated HCl acid (37%, reagent grade from Sharlau) and 0.1M NH4OH solution from concentrated ammonia solution (28% w/w, reagent grade from Sharlau). Acetone technical grade from Sharlau was used to wash the microcapsules.
  ∘ Synthesis of hollow silica microcapsules: In order to prepare the silica hollow spheres first the synthesis of silica microencapsulated epoxy was carried out as described elsewhere (ref: I. Kaltzakorta, E. Erkizia Study on the effect of sol-gel parameters on the size and morphology of silica microcapsules containing different organic compounds Phys. Stat. Sol. C7 (2010) 2697-2700). Then the silica microcapsules were washed with acetone to remove the epoxy compound. Once the empty microcapsules were obtained and after drying, they were calcined in an oven. The calcination was carried out by heating the microcapsules up to 540°C during 2 hours, maintained at 540°C for 4 hours, then increase the temperature up to 700°C in 1h and maintained them at 700°C for 2 hours. The microcapsules were left to cool down slowly. Finally, the hollow microcapsules were sieved so as to guarantee that their sizes are below 50 $\mu$m.

• DRCCC (cement paste)
Before adding the water, the powders of $C_3S$ and Hollow Silica particles were gently mixed for 60 seconds at 300 rpm. Later the water was added and everything was initially mixed for 90 seconds at 750 rpm. Later a pause of 60 seconds was undertaken and finally the products were mixed again for 90 seconds at 750 rpm. The resulting cement paste was casted in a mold and sealed. After 24 hours, the cement paste was moved to a hermetically closed desiccator with 100%RH and kept at 20°C. The DRCCC (a cement paste) prepared in this Example 3 was analysed after 28 days of curing.

*Table 3. Mass percentage of the components used for preparing the DRCCC (cement paste) of Example 3*

| C3S | Hollow Silica | $H_2O$ |
|---|---|---|
| 100 | 25 | 45 |

► Characterization

Repeating the scenario of $T_{ambient}$=25ªC and 900W/m$^2$ of solar irradiance the material of Example 3 exhibits much better performance at lower temperatures than previous cases analysed in Example 2. Indeed, at 25°C the material of Example 3 already behaves as a DRCCC.

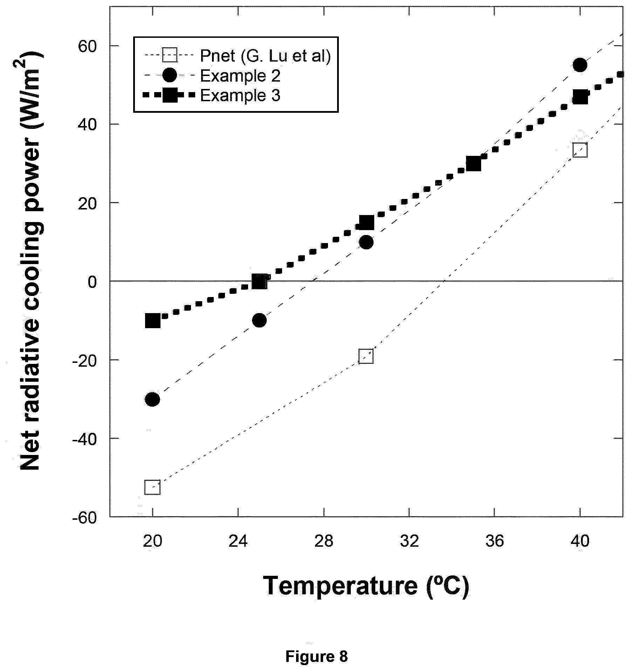

As can be seen from Figure 8, the DRCCC of Example 3 (solid squares) outperforms the DRCCC of Example 2 (solid points) and the concrete of Lu et al. (open squares). Only at temperatures higher than 35 °C the DRCCC of Example 2 starts being better than DRCCC of the Example 3.

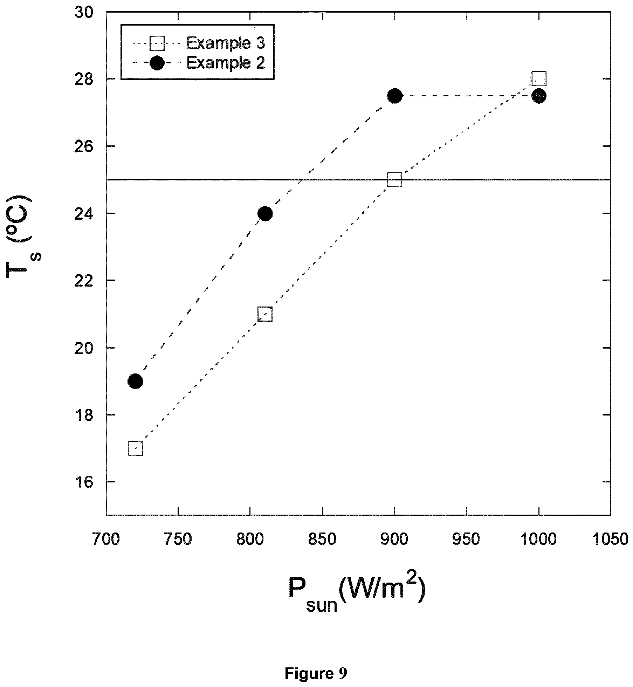

An alternative way of showing the performance of Example 3 is to display the equilibrium temperature at different sun radiation intensities. Figure 9 compares the surface temperature of the DRCCC of Example 3 (open squares) with this of the DRCCC of Example 2 (solid points)

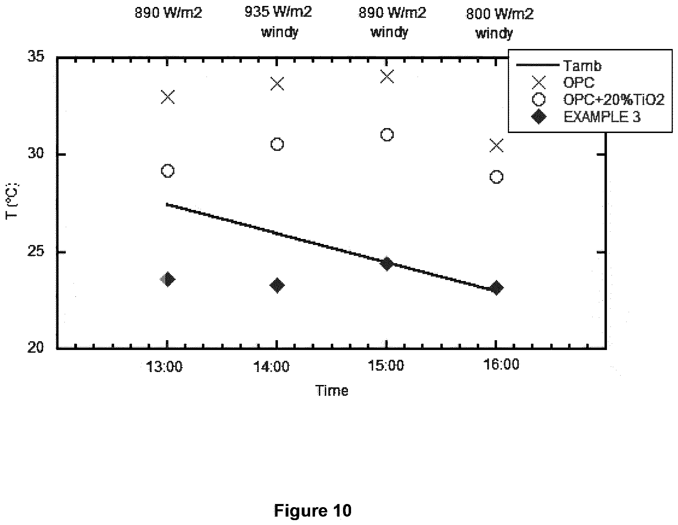

Finally, the DRCCC of Example 3 has been tested over the central hours of the day (13:00-16:00) on the roof of the Centro de Fisica de Materiales's building, where the sun irradiation, the sample temperature, wind conditions and ambient temperatures were monitored. For comparison, two other samples (a regular OPC cement paste and an OPC cement paste with 20%BW of additions of $TiO_2$) were also tested. The results can be seen in Figure 10.

As can be seen, the temperature of the sample of Example 3 is subambient (below ambient temperature), being approximately the same as the ambient temperature during the last two hours of the experiment. In strong contrast, the other two samples are clearly much hotter, and always at temperatures higher that the ambient temperature.

**EXAMPLE 4. DRCCC based on $TiO_2$ microadditions with a superimposed patterned structure (meta-structure)**

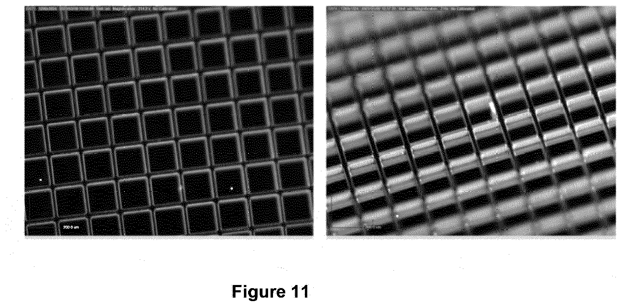

This example illustrates a DRCCC design with micropatterned structure whose photonic performance allows daytime radiative cooling. This Example 4 corresponds to the cement paste of Example 2 to which we have superimposed a patterned structure as shown in Figure 11. This patterned structure corresponds to a layered epoxy-based negative photoresist (SU-8) structure with air and Alite ($C_3S$) powders inside. The starting micropatterned structure consists of a repetition of empty cubes and it was produced by Two Photons Polymerization (TPP) technology. The SU-8 structure has been chosen because it is easily microfabricated by current 3D printing technology and it is transparent to solar radiation. Other transparent materials like PMMA or PC can be valid as well. In this example, the walls are 20 $\mu$m thick and the square holes have a side of 180 $\mu$m with a depth of 65 $\mu$m (see SEM image in Figure 11). According to our electromagnetic simulations, other realizations with thinner walls (about 5 $\mu$m) and larger periods (about or larger than 5 mm) provide better results at the cost of more laborious 3D printing process.

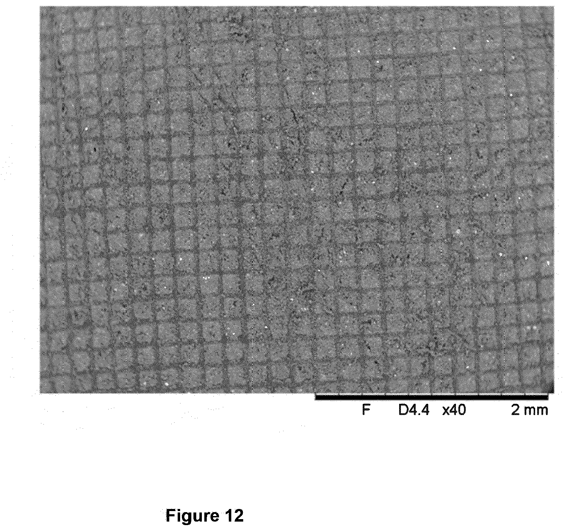

Afterwards, the 3D micropattern has been filled with $C_3S$ particles (the same used for making the DRCCC of Example 2). The $C_3S$ particles were meticulously introduced into the three-dimensional printed matrix using a brush, with the surface of the matrix being delicately manipulated until a noticeable reduction in matrix transparency was attained. A SEM image can be seen in Figure 12.

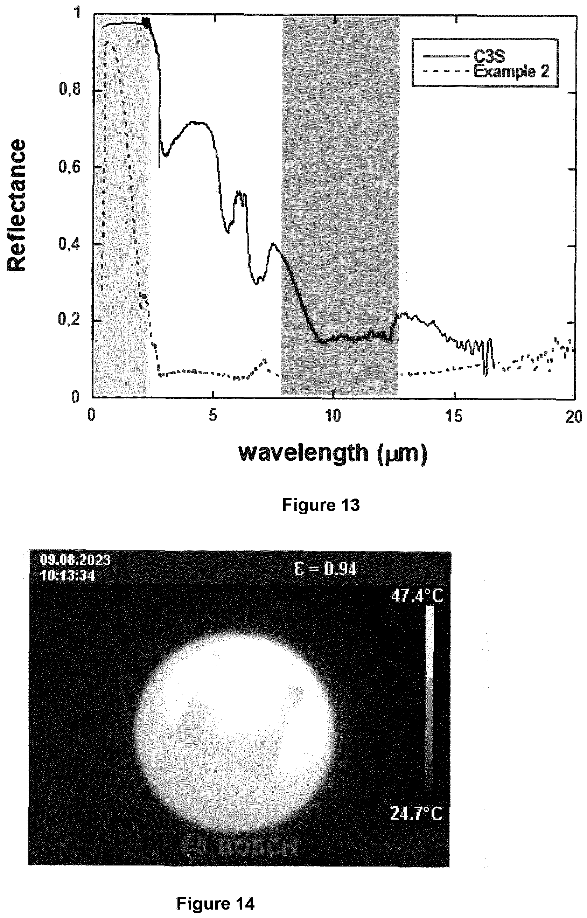

This embodiment exploits the ultra-high radiative cooling capacity of $C_3S$ powders in combination to air. Indeed, the direct measurements of $C_3S$ powders gives the reflectance shown by the solid line in Figure 13. For comparison, the one exhibited by the DRCCC of Example 2 (dashed line) is also displayed.

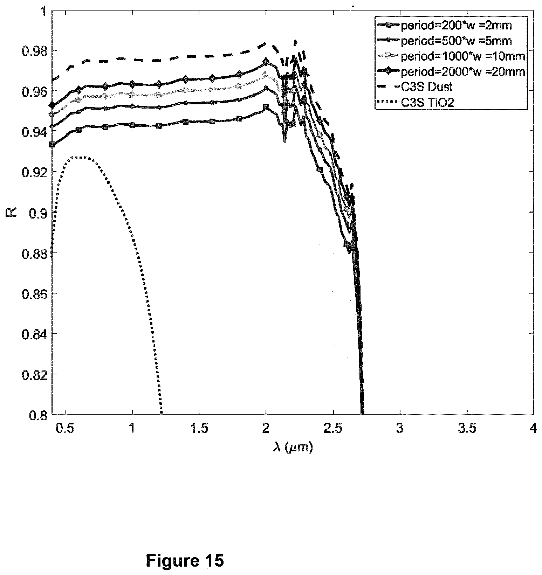

Later the so-formed 3D micropatterned structure was directly placed on top of the already cured DRCCC sample shown in Example 3. No adhesive was employed, though it might be employed as well. Similarly, the 3D micropatterned structure can be deposited when the cementitious composite is fresh before it hardens. The important point is that when the 3D micropatterned structure is superimposed on top of the DRCCC of Example 3, the performance improves. As a simple proof, an IR camera was employed to monitor the temperature of the DRCCC with the 3D micropattern on top of it. In this experiment, the light illuminating the sample came from an artificial halogen lamp at 950 W/m$^2$, being the ambient temperature very high (41 °C $\pm$ 2°C). As the 3D micropattern only covered a portion of the DRCCC surface, the IR camera clearly illustrates that the portion covered by the 3D structure is cooler than the uncovered part (see Figure 15).

Several aspects of the embodiment can be changed. For instance, the use of other filling elements like Portlandite (CH), $C_2S$ or $C_3A$ is possible. Besides, other geometrical designs (Thickness/Period/Depth) can improve further the performance. Indeed, the electromagnetic response of the studied structures has been calculated using the MATLAB based simulator GD-Calc® (Grating Diffraction Calculator), based on the Rigorous Coupled-Wave Method (RCWM) [Kenneth C. Johnson, "GD-Calc." https://kjinnovation.com/ (accessed Sep. 26, 2022)]. Such tool computes the emission spectrum of a 3D device from the diffraction efficiency of the geometry. In this computational solver, the dielectric functions of the materials are needed as input; namely those of the substrate (DRCCC of Example 2), $C_3S$ powder and the SU 8. The first two were obtained by Krammers-Kronig equations from the reflectance measurements and the last one from [Ghanekar, Alok et al. "Dynamic optical response of SU-8 upon UV treatment."Optical materials express 8 7 (2018): 2017-2025]. Figure 15 represents the effect of the period while maintain fixed the wall thickness (10 microns) and the deep (65 microns). For comparison purposes, the reflectance of the $C_3S$ powder ($C_3S$ Dust, dashed line) and the one of the DRCCC of Example 2 ($C_3S$ $TiO_2$; dotted line) are also represented.

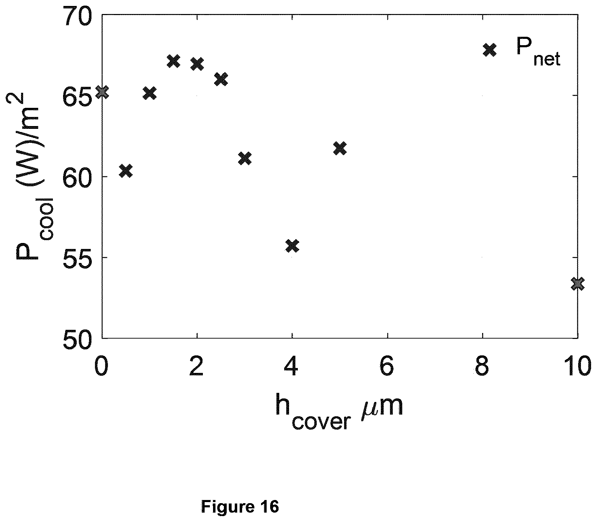

Another aspect that can be improved from the embodiment of Example 4 is that the 3D structure is uncovered. A cover can be needed for avoiding CaS particles from reacting with water (humidity, rain, etc). The cooling efficiency depends on the width of the cover (hsus). With the same computational scheme described above, the best design of Figure 15 (i.e. the one with a period of 20 mm) were tested with different cover widths under ambient temperatures of 27 °C, solar radiations of 900 $W/m^2$ and atmospheric conditions with Air Mass=1 and Vapor Column = 1mm. The obtained net cooling powers can be seen in Figure 16. As can be seen, cover widths of about 2.0 $\mu$m improve the performance.

**EXAMPLE 5. DRCCC based on Hollow Capsules microadditions with a superimposed patterned structure (meta-structure)**

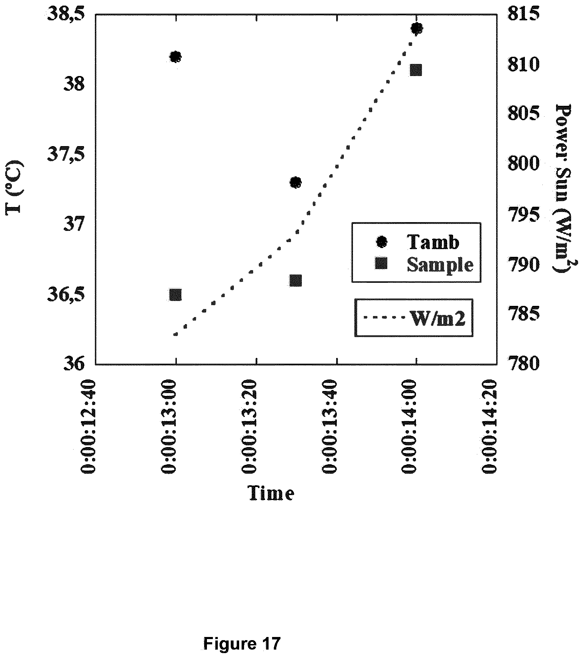

This example illustrates a DRCCC design with micropatterned structure whose photonic performance allows daytime radiative cooling. This Example 5 corresponds to the cement paste of Example 3 to which we have superimposed on top a patterned structure as shown in Figure 12 (3D structure filled with C3S particles). The DRCCC of example 5 has been tested over central hours of the day (13:00-14:00) on the roof of the Centro de Fisica de Materiales's building, where the Sun irradiation, the sample temperature, wind conditions and ambient temperatures were monitored. The results are displayed in Figure 17, where it is evident that the sample temperature is always subambient.

**Claims**

1. A Daytime Radiative Cooling Cementitious composite comprising:

    • an OPC binder in the form of grains, with an amount of $Fe_2O_3$ lower than 0.05 % by weight with respect to the total weight of the OPC binder, wherein the grain size is below 25 $\mu$m,
    • water, wherein the weight ratio between water and the OPC binder is between 0.2 to 0.6,
    • an addition in a proportion between 0.1% and 50% by weight with respect to the weight of the OPC binder

    and wherein the resulting DRCCC has a pore size below 6 $\mu$m as defined by mercury intrusion porosimetry.

2. A Daytime Radiative Cooling Cementitious composite according to claim 1, wherein the amount of $Fe_2O_3$ in the cementitious composite is lower than 0.01 %, more preferably lower than 0.001 %, by weight with respect to the total weight of the OPC binder.

3. A Daytime Radiative Cooling Cementitious composite according to claim 1 or 2, wherein the cementitious composite has a porosity where the larger pores are of the order of 5-6 $\mu$m, preferably between 4-5 $\mu$m, more preferably below 4 $\mu$m.

4. A Daytime Radiative Cooling Cementitious composite according to any one of the preceding claims, wherein the cementitious composite comprises an addition in an amount between 0.5% and 50%, preferably between 15 and 45%, even more preferably between of 20 and 25% by weight with respect to the total weight of OPC binder.

5. A Daytime Radiative Cooling Cementitious composite according to claim 1, wherein the
the addition is selected from:

    o titanium dioxide particles, calcium carbonate particles, or both, of sizes between 10 nm and 20 $\mu$m, preferably between 1 $\mu$m to 5 $\mu$m
    o hollow inorganic capsules of sizes between 10 nm and 50 $\mu$m and wall thickness below 10 $\mu$m, preferably wall thickness between 1 $\mu$m to 5 $\mu$m
    o hollow organic capsules of sizes between 10 nm and 50 $\mu$m and wall thickness below 10 $\mu$m, preferably wall thickness between 1 $\mu$m to 5 $\mu$m,
    o microencapsulated Phase Change Materials (MPCM) wherein a Phase Change Material is inside of inorganic or organic capsules of sizes below 50 $\mu$m and wall thicknesses below 1 $\mu$m.

6. A Daytime Radiative Cooling Cementitious composite according to claim 1, wherein the the addition consists of hollow inorganic capsules.

7. A Daytime Radiative Cooling Cementitious composite according to claim 1, wherein the the addition consists of hollow organic capsules.

8. A Daytime Radiative Cooling Cementitious composite according to claim 1, comprising micropatterns displayed in an ordered fashion.

9. A Daytime Radiative Cooling Cementitious composite according to claim 8, wherein the micropatterns can be made of:

> - metallic solid fibers,
> - polymeric coated fibres,
> - 3D gratings with high refractive index contrast elements,
> - 3D gratings made of organic resins containing air and/or highly reflective solid particles.

10. A Daytime Radiative Cooling Cementitious composite according to claim 8, wherein the micropatterns comprise structures selected among: hollow triangles, squares, hexagons, solid cylinders, solid prisms and spheres.

11. A Daytime Radiative Cooling Cementitious composite according to claim 8, wherein the micropatterns have a size ranging from hundreds of nanometres up to hundreds of millimetres.

12. A Daytime Radiative Cooling Cementitious composite according to claim 8, wherein the micropatterns have layers with thickness between 1 micron to 30 microns, a depth between 10 to 100 microns and length between 100 microns to hundreds of millimetres.

13. A Daytime Radiative Cooling Cementitious composite according to claim 8, wherein the micropatterns have shape of 3D structures with empty spaces, wherein the empty spaces are filled by materials selected among CaS particles, $C_3A$ particles, $C_2S$ particles, $TiO_2$ nanoparticles and Portlandite particles (CH).

14. A Daytime Radiative Cooling Cementitious composite according to claim 13, wherein 3D structures are filled and have further a cover and wherein said cover is made of a material selected from the same material of the micropatterns or a different material

15. A Daytime Radiative Cooling Cementitious composite according to claim 14, wherein the cover has a width ranging between 0 microns and 20 microns.

16. A Daytime Radiative Cooling Cementitious composite according to claim 1, which is a DRCCC selected among concrete, mortar cement and cement paste.

17. A Daytime Radiative Cooling Cementitious composite according any one of the preceding claims wherein the OPC binder contains between 70 and 100% w/w of $C_3S$, preferably, between 90-100% and more preferably 100% w/w.

18. A Daytime Radiative Cooling Cementitious composite according any one of the preceding claims, further comprising superplasticizers.

19. A method for obtaining DRCCC defined in any one of the preceding claims, with micropatterns, that comprises preparing the DRCCC and printing the micropatterns on the DRCCC surface or applying two photon polymerization technique.

20. Use of the DRCCC defined in any one of claims 1 to 18, in the construction industry.

21. Use according to claim 21, wherein construction industry is building construction.

22. Use of the DRCCC defined in any one of claims 1 to 18, in civil works.

23. Use of the DRCCC according to claim 22, wherein the civil works are selected from among reservoirs, bridges, dams and sewers.

24. Use of the DRCCC defined in any one of claims 1 to 18, in solar cell technology.

25. Use of the DRCCC defined in any one of claims 1 to 18, in urban architectural design.

**Figure 1**

Figure 2

Figure 3

Figure 4

## C$_3$S-based cement paste (w/c = 0.45) + TiO$_2$

**Figure 5**

Figure 6

Figure 7

Figure 8

**Figure 9**

**Figure 10**

Figure 11

Figure 12

**Figure 13**

**Figure 14**

**Figure 15**

**Figure 16**

Figure 17

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | LU GUO ET AL: "Radiative cooling potential of cementitious composites: Physical and chemical origins", CEMENT AND CONCRETE COMPOSITES, ELSEVIER APPLIED SCIENCE, BARKING, GB, vol. 119, 6 March 2021 (2021-03-06), XP086526904, ISSN: 0958-9465, DOI: 10.1016/J.CEMCONCOMP.2021.104004 [retrieved on 2021-03-06] | 1-5, 16-18, 20-23,25 | INV. C04B7/52 C04B28/04 |
| Y | * paragraphs [02.1], [02.2], [2.3.3], [03.1], [4.1.1]; figures 2,7,9, 8b; table 1 * | 6-12,19 | |
| A | DOLADO JORGE S. ET AL: "Radiative Cooling Properties of Portlandite and Tobermorite: Two Cementitious Minerals of Great Relevance in Concrete Science and Technology", ACS APPLIED OPTICAL MATERIALS, 23 June 2023 (2023-06-23), XP093136846, ISSN: 2771-9855, DOI: 10.1021/acsaom.3c00082 Retrieved from the Internet: URL:https://pubs.acs.org/doi/pdf/10.1021/a csaom.3c00082> * paragraphs [0001], [02.1], [0004], [0005]; figures 1,4,6; table 1 * | 1-25 | |

TECHNICAL FIELDS SEARCHED (IPC)

C04B

-/--

The present search report has been drawn up for all claims

| Place of search | Date of completion of the search | Examiner |
|---|---|---|
| The Hague | 4 March 2024 | Theodoridou, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

## EUROPEAN SEARCH REPORT

Application Number

EP 23 38 2854

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | J. Dolado ET AL: "Photonic Metaconcrete with Infrared RAdiative Cooling capacity for Large Energy savings (MIRACLE)", , 12 May 2021 (2021-05-12), pages 1-8, XP093136862, Spain Retrieved from the Internet: URL:https://miracle-concrete.eu/wp-content /uploads/2021/05/Brochure_MIRACLE-IN-A-NUT SHELL.pdf [retrieved on 2024-03-01] | 8-12,19 | |
| A | * pages 6,7 * ----- | 13-15 | |
| A | US 2003/159618 A1 (PRIMUS CAROLYN M [US]) 28 August 2003 (2003-08-28) * paragraphs [0018], [0019]; tables II,III * ----- | 1,2,4,5 | |
| A | US 2005/126444 A1 (LOPEZ-GONZALES WALTTER [MX] ET AL) 16 June 2005 (2005-06-16) * paragraphs [0020], [0024], [0030] - [0038], [0067] * ----- | 1,2,4,5 | TECHNICAL FIELDS SEARCHED (IPC) |
| Y | US 2017/210874 A1 (HUGO GERD [DE]) 27 July 2017 (2017-07-27) * example 9 * ----- | 6,7 | |

The present search report has been drawn up for all claims

| Place of search | Date of completion of the search | Examiner |
|---|---|---|
| The Hague | 4 March 2024 | Theodoridou, K |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 38 2854

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2024

| Patent document cited in search report | Publication date | Patent family member(s) | Publication date |
|---|---|---|---|
| US 2003159618 A1 | 28-08-2003 | US 2003159618 A1 | 28-08-2003 |
| | | US 2004226478 A1 | 18-11-2004 |
| | | US 2005263036 A1 | 01-12-2005 |
| | | US 2009064895 A1 | 12-03-2009 |
| | | US 2009314181 A1 | 24-12-2009 |
| US 2005126444 A1 | 16-06-2005 | BR 0305953 A | 17-08-2004 |
| | | CA 2452675 A1 | 10-06-2004 |
| | | CN 1513793 A | 21-07-2004 |
| | | CO 5430220 A1 | 01-06-2004 |
| | | CR 7189 A | 10-03-2009 |
| | | DO P2003000780 A | 31-07-2004 |
| | | EP 1428804 A2 | 16-06-2004 |
| | | ES 2500115 T3 | 30-09-2014 |
| | | GT 200300278 A | 12-04-2007 |
| | | HN 2003000406 A | 26-03-2007 |
| | | JP 2004189597 A | 08-07-2004 |
| | | MX PA02012235 A | 16-07-2004 |
| | | PA 8591501 A1 | 02-11-2004 |
| | | US 2005126444 A1 | 16-06-2005 |
| US 2017210874 A1 | 27-07-2017 | AT E423823 T1 | 15-03-2009 |
| | | AU 2005311390 A1 | 08-06-2006 |
| | | BR PI0515755 A | 29-07-2008 |
| | | CA 2589107 A1 | 08-06-2006 |
| | | CN 101115805 A | 30-01-2008 |
| | | EP 1817383 A1 | 15-08-2007 |
| | | ES 2320913 T3 | 29-05-2009 |
| | | HK 1117186 A1 | 09-01-2009 |
| | | JP 5424560 B2 | 26-02-2014 |
| | | JP 2008521986 A | 26-06-2008 |
| | | KR 20070092258 A | 12-09-2007 |
| | | PL 1817383 T3 | 31-07-2009 |
| | | PT 1817383 E | 13-04-2009 |
| | | US 2009130430 A1 | 21-05-2009 |
| | | US 2017210874 A1 | 27-07-2017 |
| | | US 2020115521 A1 | 16-04-2020 |
| | | WO 2006058782 A1 | 08-06-2006 |
| | | ZA 200704483 B | 27-08-2008 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MANDAL et al.** Paints as a Scalable and Effective Radiative Cooling Technology for Buildings. *Joule*, 2022, vol. 4, 1350-1356
- **LU et al.** Radiative cooling potential of cementitious composites: Physical and chemical origins. *Cement and Concrete Composites*, 2021, vol. 119, 104004, https://doi.org/J.cemconcomp/2021.104004
- **N. YANG et al.** Geopolymer-based sub-ambient daytime radiative cooling coating. *EcoMat*, 2022, vol. 5, e12284
- **D. LIU et al.** Scalable Cooling Cementitious Composites: Synergy between Reflective, Radiative, and Evaporative Cooling. *Energy & Buildings*, 2023, vol. 285, 112909
- **LINK et al.** *Cement and Concrete Research*, 2015, vol. 67, 131-137
- **A. CUESTA** ; **I. SANTACRUZ** ; **S.G. SANFÉLIX** ; **F. FAUTH** ; **M.A.G. ARANDA** ; **A.G. DE LA TORRE**. Hydration of C4AF in the presence of other phases: A synchrotron X-ray powder diffraction study. *Construction and Building Materials*, 30 December 2015, vol. 101, 818-827
- **LU et al.** *Cement and Concrete Composites*, 2021, vol. 119, 104004, https://doi.org/J.cemconcomp/2021.104004
- **G. LU et al.** *Cement and Concrete Composites*, 2021, vol. 119, 104004, https://doi.org/J.cemconcomp/2021.104004
- **I. KALTZAKORTA** ; **E. ERKIZIA**. Study on the effect of sol-gel parameters on the size and morphology of silica microcapsules containing different organic compounds. *Phys. Stat. Sol.*, 2010, vol. C7, 2697-2700
- **KENNETH C. JOHNSON**. *GD-Calc.*, 26 September 2022, https://kjinnovation.com
- **GHANEKAR, ALOK et al.** Dynamic optical response of SU-8 upon UV treatment.. *Optical materials express*, 2018, vol. 8 (7), 2017-2025